# EUROPÄISCHE PATENTANMELDUNG

(11) **EP 2 455 855 A1**
(43) Veröffentlichungstag der Anmeldung: **23.05.2012**
(21) Anmeldenummer: 10014828.7
(22) Anmeldetag: 22.11.2010
(51) Int. Cl.: G06F 9/44

(54) **Graphische Vergleichsanzeige von Software**

(71) Anmelder: Siemens AG, 80333 München (DE)
(72) Erfinder: Balassa, Béla, 8000 Székesfehérvár (HU); Braun, Michael, 91486 Uehlfeld (DE); Knappe, Dr. Gwendolin, 91054 Erlangen (DE); Szabó, Attila, 2066 Szár (HU)

(57) **Zusammenfassung**

Bei einem Verfahren zum Vergleich graphischer Programme wird ein erstes Objektmodell (1) mit einem zweiten Objektmodell (2) verglichen, wobei ein erstes Differenzobjektmodell (11) und insbesondere ein zweites Differenzobjektmodell (12) dargestellt werden. Unterschiede der Programme werden jeweils in den Differenzobjektmodellen markiert.

## Beschreibung

Die Erfindung betrifft ein Verfahren zur Anzeige von Unterschieden bei einer Software. Die Software betrifft dabei insbesondere ein Softwareprogramm zur Steuerung und/oder Regelung eines industriellen Prozesses und/oder einer industriellen Maschine. Beispiele für Prozesse sind chemische Prozesse, logistische Prozesse, usw. Beispiele für Maschinen sind Werkzeugmaschinen, Produktionsmaschinen, Spritzgießmaschinen, Pressen, Druckmaschinen, Holzbearbeitungsmaschinen, usw.

Der Anwender programmiert bei speicherprogrammierbaren Steuerungen und Motion-Control-Systemen (Bewegungssteuerungen) eigene Programme für seine Anwendung. Diese werden auf ein zielgerät geladen und dort zum Ablauf gebracht. Während der Lebenszeit der Maschine oder z.B. auch während der Inbetriebsetzung der Maschine kann es z.B. durch Prozessversänderungen auch zu Änderungen in den Programmen für die Zielgeräte (z.B. Stromrichter, Speicherprogrammierbare Steuerung (SPS), Leitrechner) kommen. Dadurch können mehrere Versionen von Programmen für das entsprechende Zielgerät entstehen. Deshalb besteht die Notwendigkeit, zum einen die Programme (also die Software) auf Veränderungen untereinander zu vergleichen (Offline-Offline-Vergleich), sowie zwischen einem gespeicherten Projektstand und dem Zielgerät (Online-Offline-Vergleich) Unterschiede feststellen zu können.

Beispielhaft seien Motion-Control-Systeme genannt, bei welchen dem Anwender zumindest eine der nachfolgend genannten Ausprägungen von Programmiersprachen oder -methoden zur Verfügung stehen. Diese sind im Einzelnen z.B.:
- Structured Text (textuelle Hochsprachenprogrammierung)
- Kontaktplan (grafische Verknüpfungslogik)
- Funktionsplan (grafische Verknüpfungslogik)
- Ablaufdiagramm, insbesondere Notion-Control-Chart MCC (grafische Flussdiagrammprogrammierung).

Für den Vergleich von textuellen Sprachen (insbesondere Hochsprachen), wie C, C++, Pascal, Fortran, usw. ist die vergleichsfunktionalität durch den Vergleich von Programmiertexten gegeben. Bei grafischen Programmiersprachen, insbesondere bei grafischer Flussdiagramtnprogrammierung stehen keine vergleichsfunktionen zur Verfügung.

Eine Aufgabe der vorliegenden Erfindung ist es, bei grafischen Programmiersprachen, insbesondere bei grafischer Flussdiagrammprogrammierung Vergleichsfunktionen zur Verfügung zu stellen.

Eine Lösung der Aufgabe gelingt beispielsweise bei einem Verfahren zum Vergleich graphischer Programme nach Anspruch 1. Weitere Ausgestaltungen ergeben sich gemäß den Merkmalen nach den abhängigen Ansprüchen 2 bis 10.

Unter einem graphischen Programm wird dabei ein Softwareprogramm verstanden, welches mittels graphischer Elemente dargestellt und/oder programmiert ist. Ein Beispiel hierfür ist eine grafische Flussdiagrammprogrammierung, ein Kontaktplan (KOP) oder ein Funktionsplan (FUP).

Bei einem derartigen Verfahren zum Vergleich von Programmen (dabei kann es sich um vollständige Programme oder auch um Programmteile handeln) wird ein erstes Objektmodell mit einem zweiten Objektmodell verglichen, wobei z.B. ein erstes Differenzobjektmodell erzeugt wird. Das erste Differenzobjektmodell zeigt Unterschiede zwischen dem ersten Objektmodell und dem zweiten Objektmodell auf Basis des ersten Objektmodells an, falls diese vorhanden sind. Vorteilhaft wird auch ein zweites Differenzobjektmodell dargestellt, welches Unterschiede zwischen dem zweiten Objektmodell und dem ersten Objektmodell auf Basis des zweiten Objektmodells anzeigt, falls zumindest ein Unterschied vorhanden ist.

Unter einem Objektmodell ist beispielsweise ein Kontaktplan, ein Funktionsplan oder ein Flussdiagramm zu verstehen. Das Objektmodell kann demnach folglich ein graphisches Programm darstellen.

Mit Hilfe eines Ablaufdiagramms lässt sich ein programmablauf programmieren und/oder darstellen. Insbesondere Programme in der Automatisierungstechnik können so auf einfache Weise graphisch mit Hilfe graphischer Elemente programmiert werden. Beispiele für Automatisierungseinrichtungen die eine derartige Programmierung erlauben können sind:
- Speicherprogrammierbare Steuerungen (SPS),
- Bewegungssteuerungen (insbesondere zur Regelung und/oder Steuerung von Bewegungsabläufen),
- Stromrichter,
- Leitrechner (z.B. für Druckmaschinen), z.B. für Fertigungsbänder, Stahlwerke, Werkzeugmaschinen, Verpackungsmaschinen, Glasformungsmaschinen, usw.

Programme können auf derartigen Einrichtungen ablaufen, und sind beispielsweise mittels eines Engineeringsystems auf graphischer Basis programmiert. Anwenderprogramme (insbesondere Teileprogramme für eine Werkzeugmaschine) einer Werkzeugmaschine kommen dann beispielsweise auf einem Runtimesystem der Werkzeugmaschine zum Einsatz.

Das Ablaufdiagramm ist ein Programmablaufplan (PAP) der auch als Flussdiagramm (flowchart) oder Programmstrukturplan bezeichnet werden kann. Mit Hilfe einer graphischen Darstellung kann eine Umsetzung eines Algorithmus in einem Computerprogramm erfolgen. Computerprogramme im weiteren Sinne sind dabei Programme, welche wie bereits beschrieben beispielsweise auf Steuerungseinrichtungen (z.B. Speicherprogrammierbare Steuerungen (SPS)) oder Regelungseinrichtungen (z.B. Bewegungssteuerungen) in industriellen Anlagen auf Prozessoren ablaufen. Durch die graphische Darstellung kann in anschaulicher Weise eine Folge von Operationen zur Lösung einer Aufgabe beschrieben sein.

Mögliche Symbole für Elemente in Programmablaufplänen sind beispielsweise in der DIN 66001 beschrieben. Dort sind auch Symbole für Datenflusspläne als eine weitere Art von Ablaufdiagramm definiert. Programmablaufpläne können auch unabhängig von Computerprogrammen zur Darstellung von Prozessen und Tätigkeiten eingesetzt werden.

Ein weiteres Beispiel für ein Ablaufdiagramm ist ein Nassi-Shneiderman-Diagram (Struktogramm). Auch bei der Abbildung objektorientierter Programmkonzepte durch UML finden erweiterte Ablaufdiagramme Anwendung. Aus der ISO 5807 Informationsverarbeitung sind Symbole und Konventionen für Ablaufdiagramme bekannt.

Als Ablaufdiagramm dargestellte Programme stellen ein Objektmodell dar, welche insbesondere unter zu Hilfenahme einer graphischen Programrnieroberfläche geschrieben sind, also bereits im Sinne eines Ablaufdiagramms vorhanden sind. Es ist auch möglich, dass Programme textuell erstellt werden, um danach in einem Ablaufdiagramm graphisch dargestellt zu werden. Auch ein in KOP (Kontaktplan) oder FUP (Funktionsplan) geschriebenes Programm kann in einem Ablaufdiagramm beschrieben werden.

Derartige Programme werden in Maschinensprache übersetzt. Elemente des Ablaufdiagramms können z.B. Ovale, Rechtecke, Rauten, usw. sein, welche bestimmte Funktionen beschreiben. Nach der DIN 66001 werden beispielsweise Start-Punkte, Stopp-Punkte, bzw. Grenzpunkte durch ein Oval beschrieben. Pfeile und Linien geben eine Verbindung zum nächstfolgenden Element an. Ein Rechteck stellt eine Operation dar, wobei ein Rechteck mit doppelten, vertikalen Linien einen Unterprogrammaufruf anzeigt. Mittels einer Raute ist eine Verzweigung beschrieben, wodurch eine Wahrheitsprüfung symbolisiert ist. Eingaben und Ausgaben sind beispielsweise als Parallelogramm darstellbar. Neben Start-Elementen, Stopp-Elementen, Grenzpunkt-Elementen, Operations-Elementen, Elementen für den Aufruf bzw. die Abarbeitung eines oder mehrerer Unterprogramme, Verzweigungs-Elementen, Eingabe-Elementen bzw. Ausgabe-Elementen sind auch noch weitere Elemente in einem Ablaufdiagramm realisierbar.

Für einen Anwender des Automatisierungssystems, z.B. einen Bediener oder Programmierer, ist es wichtig, den Ablauf des Programms graphisch leicht erkennen und/oder programmieren zu können. Für den Anwender ist es auch wichtig Änderungen z.B. zu einem alten Versionsstand eines Programms erkennen bzw. analysieren zu können.

Ein Automatisierungssystem weist beispielsweise eine Vorrichtung zum Parametrieren, Projektieren und/oder Inbetriebnehmen von Steuerungssystemen und/oder zum Erstellen von vorzugsweise zyklischen Steuerungsprogrammen mit einer graphischen Editoreinrichtung zum Editieren eines Steuerungsprogramms auf. Hierfür kann ein Engineeringsystem eingesetzt werden. Dieses Engineeringsystem kann beispielsweise einen Vergleich von Objektmodellen durchführen. Alternativ oder zusätzlich dazu kann auch ein Runtimesystem zum Vergleich von Objektmodellen verwendet werden.

Unterschiede zwischen den Objektmodellen können durch verschiedene graphische Maßnahmen dargestellt werden. Das graphische Erscheinungsbild von Elementen und Verbindungen zwischen Elementen kann beispielsweise durch eine oder mehrere der folgenden Maßnahmen geändert werde:
- Änderung der Farbe bei einem Element;
- Änderung einer Strichstärke bei einem Element;
- Änderung der Graustufe bei einem Element;
- Änderung der Beschriftung bei einem Element;
- Änderung der Farbsättigung bei einem Element;
- Blinken eines Elementes;
- usw.

Durch den graphisch basierten Vergleich von Programmen, wobei ein erstes Objektmodell (insbesondere ein erstes Ablaufdiagramm) mit einem zweiten Objektmodell (insbesondere ein zweites Ablaufdiagramm) verglichen wird, wird ein einfacher graphischer Detailvergleich von Elementen einer Flussdiagrammprogrammierung erreicht. Damit ist es auch möglich grafische Verknüpfungslogiken miteinander zu vergleichen.

In einer Ausgestaltung des Verfahrens zum Vergleich graphischer Programme wird das erste Objektmodell mit dem zweiten Objektmodell verglichen, wobei ein erstes und zweites Differenzobjektmodell erstellt wird. Die Differenzobjektmodelle zeigen an, wie sich das erste Objektmodell bzw. das zweite Objektmodell jeweils vom jeweilig anderen Objektmodell unterscheidet.

In einer Ausgestaltung des Verfahrens wird zum Vergleich der Objektmodelle das erste Objektmodell mit dem zweiten Objektmodell zu einem Gesamtmodell zusammengefasst. Dieses Gesamtmodell (Gesamtobjektmodell) kann, muss jedoch nicht, einem Anwender dargestellt werden. Zumindest eines der Objektmodelle wird mit dem Gesamtmodell verglichen, wobei Unterschiede zwischen Gesamtmodell und zumindest einem der Objektmodelle im jeweiligen Differenzobjektmodell dargestellt werden. Im ersten Differenzobjektmodell werden die Unterschiede zwischen dem Gesamtmodell und dem ersten Objektmodell dargestellt. Im zweiten Differenzobjektmodell werden die Unterschiede zwischen dem Gesamtmodell und dem zweiten Objektmodell dargestellt.

In einer Ausgestaltung des Verfahrens wird das erste Objektmodell mit dem Gesamtmodell verglichen. Das erste Objektmodell wird mit den Unterschieden zum Gesamtmodell im ersten Differenzobjektmodell dargestellt. Das zweite Objektmodell wird auch mit dem Gesamtmodell verglichen und mit den Unterschieden zum Gesamtmodell im zweiten Differenzobjektmodell dargestellt. Unterschiede werden dabei insbesondere farbig hervorgehoben, wobei vorteilhaft erstes und zweites Differenzobjektmodell gleichzeitig nebeneinander auf einem Bildschirm dargestellt werden.

In einer Ausgestaltung des Verfahrens werden die Differenzobjektmodelle derart gegenüber gestellt, dass gleiche bzw. gleichartige Elemente vom ersten und zweiten Objektmodell in beiden Differenzobjektmodellen vertikal oder horizontal auf gleicher Höhe dargestellt werden. Dies ermöglicht einen besonders einfachen Vergleich der Modelle. vorteilhaft werden Elemente des Differenzobjektmodells, welche sich vom jeweiligen Ausgangs-Objektmodell nicht unterscheiden nicht hervorgehoben.

In einer Ausgestaltung des Verfahrens werden in den Differenzobjektmodellen Gleichartigkeiten zwischen dem ersten Objektmodell und dem zweiten Objektmodell dargestellt.
In einer Ausgestaltung des Verfahrens wird im ersten Differenzobjektmodell und/oder im zweiten Differenzobjektmodell ein fehlendes Element und/oder zusätzliches Element dargestellt bzw. markiert.

In einer Ausgestaltung des Verfahrens zeigt ein Differenzobjektmodell zumindest einen der nachfolgenden Unterschiede zwischen den Objektmodellen:
- ein zusätzliches Element,
- ein fehlendes Element,
- eine zusätzliche Verknüpfung,
- eine fehlende Verknüpfung,
- eine gleiche Parametrierung eines Elementes,
- eine unterschiedliche Parametrierung eines Elementes, und/oder
- einen unterschiedlichen Versionsstand eines Elementes.

In einer Ausgestaltung des Verfahrens wird das erste Objektmodell mit dem zweiten Objektmodell derart verglichen, dass aus dem ersten Objektmodell erste XML-Daten generiert werden, dass aus dem zweiten Objektmodell zweite XML-Daten generiert werden, und dass die XML-Daten derart verarbeitet werden, dass mit Hilfe der verarbeiteten Daten das erste Differenzobjektmodell und das zweite Differenobjektmodell generiert werden.

Auch mit Hilfe der XML-Daten lässt sich eine Repräsentanz für ein Gesamtmodell erzeugen, wobei dann diese XML-Daten des Gesamtmodells mit den XML-Daten der Objektmodelle verglichen werden und hieraus wieder eine graphische Anzeige von Differenzobjektmodellen erzeugt wird.

Wenn ein Anwender graphische Programme wie Kontaktpläne (KOP) und/oder Funktionspläne (FUP) vergleichen will, so kann hierfür zumindest ein Kennwert für die Programme ermittelt werden, welche zu vergleichen sind. Dies erlaubt dem Anwender grafische Programme, die in Verknüpfungslogik programmiert sind, miteinander schnell und mit geringerem Rechenaufwand zu vergleichen. Dabei können dem Anwender zum einen strukturelle Unterschiede in der Programmierung sowie auch Unterschieden in der Parametrierung angezeigt werden. In einem Vergleich werden insbesondere die Quellen (KOP bzw. FUP) gegenübergestellt und die Unterschiede z.B. farblich eingefärbt. Bei einem Vergleichsverfahren für die graphischen Programme KOP bzw. FUP wird ein erster Kennwert für ein erstes Programm ermittelt und es wird ein zweiter Kennwert für ein zweites Programm ermittelt. Der erste Kennwert des ersten Programms kann dann mit dem zweiten Kennwert des zweiten Programms verglichen werden. Das Programm betrifft dabei beispielsweise ein komplettes Programm oder auch nur einen Teiläusschnitt. Die Programme in KOP-Logik und FUP-Logik sind vorteilhaft ineinander überführbar. Beide Programmtypen (KOP und FUP) basieren auf einer graphischen Programmieroberfläche, bzw. auf einer graphischen Darstellungsweise des Programms, so dass ein derartiges Programm auch als ein Objektmodell bezeichnet werden kann. Im Funktionsplan werden Funktionsblöcke dargestellt, welche miteinander verknüpfbar sind, wobei die Blöcke Objekte darstellen, welche zu einem Modell der Programmierung verknüpft sind. Im Kontaktplan werden Kontaktblöcke graphisch dargestellt, welche Netzwerke bilden und in Ihrer Verknüpfung auch ein Modell der Programmierung ergeben. Dies trifft ebenso auf den Funktionsplan zu.

In einer Ausführungsform kann aus unterschiedlichen Objektmodellen, einem ersten Objektmodell und einem zweiten Objektmodell wieder ein Vergleich derart erzeugt werden, dass ein erstes Differenzobjektmodell und ein zweites Differenzobjektmodell erzeugt wird, wobei dies auf Basis eines "gemergten" Gesamtobjektmodells erfolgt.

KOP und FUP stellen Beispiele für eine Programmierung in einer Verknüpfungslogik dar. Durch Bildung eines Kennwertes für die jeweiligen Programme können Unterschiede einfach und schnell sowohl erkannt, wie auch graphisch angezeigt werden. Durch die Verwendung eines Kennwertes müssen nicht mehr alle Details eines Programms verglichen werden, um zu erkennen ob es einen Unterschied gibt. Mit Hilfe eines Kennwertes für ein Programm bzw. für bestimmte Merkmale eines Programms, kann schneller erkannt werden, ob sich bestimmte Merkmale von zwei oder mehreren Programmen unterscheiden oder nicht.

In einer Ausgestaltung des Verfahrens wird als Kennwert ein Hash verwendet. Der Hash, also der Hashwert (Streuwert), basiert auf einer Hashfunktion (Streuwertfunktion), dessen Ergebnis er ist. Es gibt verschiedenste Hashfunktionen, z.B. eine kryptologische Hashfunktion, als eine spezielle Form der Hashfunktion, welche die besondere Eigenschaft einer Einwegfunktion besitzt.

Eine Hashfunktion ist eine Funktion, die eine Zeichenfolge beliebiger Länge auf eine Zeichenfolge mit fester Länge abbilden kann. Die Zielmenge ist folglich kleiner als die Ausgangsmenge der gehashten Quelldaten. Unterschiedliche Quelldaten führen zu unterschiedlichen Hashwerten. Der Hashwert stellt deshalb eine Art Fingerabdruck dar, da eine nahezu eindeutige Kennzeichnung einer größeren Datenmenge möglich ist. Hashfunktionen unterscheiden sich beispielsweise in der Definitionsmenge ihrer Eingaben, der Zielmenge der möglichen Ausgaben und im Einfluss von Mustern und Ähnlichkeiten verschiedener Eingaben auf die Ausgabe, so dass auch von der unterschiedlichen Ausgabe einer Hashfunktion auf die Art eines Unterschiedes geschlossen werden kann. Da der Hashwert in der Praxis kürzer als die originale Datenstruktur ist, sind Kollisionen in manchen Fällen möglich, weshalb vorteilhaft ein verfahren zur Kollisionserkennung bereitgestellt werden kann. Ist der Hashwert groß genug, kann eine Kollision verhindert werden.

Mittels der errechneten Hashwerte können Unterschiede zwischen den Programmen erkannt werden. Die Visualisierung der Unterschiede erfolgt vorteilhaft in dedizierter Form. Zumindest einer der folgenden Unterschiede wird vorteilhaft erkannt:
- im ersten Programm sind mehr Elemente/Strukturen vorhanden als im zweiten Programm;
- im zweiten Programm sind mehr Elemente/Strukturen vorhanden als im ersten Programm; und/oder
- in beiden Programmen ist derselbe Befehl vorhanden, aber unterschiedlich parametriert.

Derartig gefundene Unterschiede können beispielsweise direkt in dem Anzeigesystem abgeglichen werden, mit welchem diese auch dargestellt sind.

In einer Ausgestaltung des Verfahrens zum Vergleich der Programme wird der Kennwert nicht aus Daten des gesamten Programms oder Teilprogramms gebildet (was auch möglich ist), sondern aus Daten des Programms, welchen zumindest eine bestimmte Funktion zugeordnet ist. Der Kennwert kann aus zumindest einer der folgenden Funktionsdaten eines Programms (insbesondere beider zu vergleichenden Programme) ermittelt werden:
- verknüpfungsdaten des jeweiligen Programms (Daten über die Verknüpfung von Funktionsblöcken bzw. Kontakten);
- Variablendaten des jeweiligen Programms (Daten über variablen von Funktionsblöcken bzw. Kontakten);
- Kommentardaten des jeweiligen Programms (Daten über Kommentare zu Funktionsblöcken bzw. Kontakten); und/oder
- Deklarationsdaten des jeweiligen Programms (insbesondere eine Deklarationstabelle).

Damit kann folglich beispielsweise ein Verknüpfungshash oder auch ein Variablenhash gebildet werden.

In einer Ausgestaltung des Verfahrens zum vergleich zumindest zweier Programme wird für jedes Netzwerk der Verknüpfungslogik jeweils ein erster Hash für die Strukturinformationen (welche die Verknüpfungsdaten betreffen) sowie ein zweiter Hash für die Parametrierung angelegt. Beim Vergleich werden nun zunächst die Hashes der Programmteile der Netzwerke miteinander verglichen. Bei Unterschieden zwischen den Strukturhashes erfolgt eine weitere Untersuchung bzgl. der Programmstruktur. Bei Unterschieden zwischen den Parameterhashes erfolgt ein Vergleich der Parametrierung. In beiden Methoden dieses zumindest zweistufigen Konzeptes erfolgt die Detailuntersuchung insbesondere über einen Fuzzy-Logic-Teil in dem heuristische Kennzahlen für die Vergleichsfunktionalität herangezogen werden. Diese heuristische Untersuchung erfolgt über verschiedene Wege, wobei jeder Weg eine entsprechende Ergebniszahl liefert. Dabei entspricht die höchste Ergebniszahl dem Weg mit der höchsten Wahrscheinlichkeit für die Gleichheit. Der Weg mit der höchsten Ergebniszahl wird dann für die Aufbereitung der Visualisierung herangezogen. In der grafischen Aufbereitung werden dann dem Anwender die Unterschiede in den Netzwerken über eine farbliche Kennzeichnung angezeigt. Mit Hilfe der Hashwerte ergibt sich ein mehrstufiges Vergleichsverfahren von Programmen, insbesondere von Programmen in der industriellen Automatisierungstechnik.

Das Vorgehen beim vergleich von Programmen die mit der Programmiersprache KOP/FUP erstellt sind, kann wie folgt mehrstufig erfolgen, wobei sich der Algorithmus für einen Detailvergleich auch in zumindest drei Ebenen gliedern kann:
- Netzwerk-Ebene (höchste Ebene)
   Es werden für die Parametrierung und die Struktur eines Netzwerkes jeweils ein Hashcode (Hashwert) gebildet. Bei einem Vergleich von zwei Programmen werden zuerst die Struktur-Hashes und Parameter-Hashes gegeneinander vergleichen. Daraus wird dann eine Entscheidung getroffen wie die weiteren Stufen des Detailvergleichs durchgeführt werden müssen. Sind die jeweilen Hashes der Programme gleich, sind auch beide Netzwerke gleich und es wird das Netzwerk als gleich gekennzeichnet. Ist einer der beiden Hashes unterschiedlich wird tiefer in den Detailvergleich verzweigt. Der Vergleich erfolgt auf Basis von heuristischen Werten für die Einzelelemente, die dann ein detailliertes Vergleichsergebnis für die Einzelelemente liefern.
- Baustein-Ebene (mittlere Ebene)
   Des Weiteren erfolgt bei Ungleichheit bei einem der beiden Hashes eine Untersuchung der im Netzwerk verwendeten Bausteine. Weisen die verwendeten Bausteine im Netzwerk eine Gleichheit oder Ungleichheit auf werden die heuristischen Parameter zur Ergebnisauswertung entsprechend herangezogen und gespeichert. Wahrheitswerte der Gleichheit auf der Bausteinebene werden, durch spezielle gewichtete Durchschnitt-Kalkulationen, von den Wahrheitswerten der Pin-Ebene abgeleitet Die Gewichte werden heuristisch eingestellt und evtl. nachträglich fein abgestimmt entsprechend dem Grad der Gleichheit erfolgt die weitere Untersuchung auf der PIN-Ebene.
- Pin-Ebene (niedrigste Ebene)
   Auf der Pin-Ebene werden einfache Algorithmen für das Paaren der Pins und zum Feststellen der Wahrheitswerte der Gleichheit der Pins benutzt. Diese Algorithmen hängen vom Typ des Bausteins ab.

Sind beide Hashes ungleich, sind die beiden Netzwerke wie schon angedeutet nicht automatisch ungleich. Deswegen werden z.B. auf der Netzwerk- und Baustein-Ebene z.B. modifizierte LCS-Algorithmen (Longest Common Subsequence) mit fuzzy Logik kombiniert. Zur Aussage ob "A ist gleich B" weisen diese Algorithmen statt einer Ja/Nein-Aussage den Elementen sogenannte Wahrheitswerte zu. Ein solcher Wahrheitswert kann einen beliebigen Wert zwischen 0 und 1 annehmen. Damit kann eine Aussage einen unterschiedlich großen Wahrheitsgehalt besitzen. Je höher der Wahrheitsgehalt, umso eher ist das Vergleichsergebnis gleich. ziel der LCS-Algorithmen ist: die Menge von disjunkten "(A,B)"-Elementpaaren auf beiden Ebenen festzustellen, bei denen die Summe dieser Wahrheitswerte maximal ist. Die Ergebnisse werden für die Anzeige entsprechend gespeichert.

In einer weiteren Ausgestaltung des Verfahrens werden zusätzlich Niedergrenzwerte zu den Paaren auf den höheren zwei Ebenen eingeführt. Eventuelle Elementpaare, bei denen der Wahrheitswert der Gleichheit unter den Niedergrenzwert fällt, werden eliminiert. Die Niedergrenzwerte werden heuristisch festgestellt.

Festgestellte Unterschiede bzw. Ergebnisse des Vergleichs der Hashwerte können mittels verschiedener Methoden angezeigt werden. Mittels eines Algorithmus kann z.B. folgendes dargestellt werden:
- Auf Netzwerk-Ebene:
   Es wird eine Liste der Netzwerkpaare (Links/Rechts) und die Wahrheitswerte der Gleichheit bei jedem Netzwerkpaar erstellt. Die Netzwerkpaare, bei denen der Wahrheitswert der Gleichheit kleiner als der Niedergrenzwert ist, werden eliminiert. Ein Netzwerk ist gepaart, wenn sich das Netzwerk in diese Netzwerkpaarliste befindet.
- Auf Baustein-Ebene:
   Es wird eine Liste der Bausteinpaare für jedes Netzwerkpaar der oben benannten Liste, und die Wahrheitswerte der Gleichheit bei jedem Bausteinpaar erstellt. Die Bausteinpaare, bei denen der Wahrheitswert der Gleichheit kleiner als der Niedergrenzwert ist, werden eliminiert. Ein Baustein ist gepaart, wenn sein Netzwerk gepaart ist und wenn sich der Baustein in der zu dem Netzwerkpaar gehörenden Bausteinpaarliste befindet.
- Auf Pin-Ebene:
   Eine Liste der Pin-Paare für jedes Bausteinpaar der oben benannten Bausteinpaarlisten wird erstellt. Die Pein-Paare mit verschalteten Pins werden aus diesen Listen eliminiert. Ein Pin ist gepaart, wenn sein Baustein gepaart ist, und wenn sich der Pin in der zu dem Bausteinpaar gehörenden Pinpaarliste befindet.

Zwei zu vergleichende Programme können in einem Editor durch zumindest eine der folgenden Darstellungsvarianten nebeneinander angezeigt werden:
- Netzwerke zweier Programme werden nebeneinander dargestellt, ein erstes Programm auf einer linken Seite, ein zweites Programm auf einer rechten Seite eines Anzeigebereiches;
- Ist ein Netzwerk auf der linken Seite nicht gepaart, so wird eine entsprechend große Lücke auf der rechten Seite eingeblendet; Es gibt keine farbliche Kenzeichnung in diesem Fall; Das Netzwerk ist im rechten Programm nicht vorhanden;
- ist ein Netzwerk auf der rechten Seite nicht gepaart, so wird eine entsprechend große Lücke auf der linken Seite eingeblendet; es gibt keine farbliche Kenzeichnung in diesem Fall; Das Netzwerk ist im linken Programm nicht vorhanden;
- ist ein Netzwerk gepaart, so werden beide Netzwerke links und rechts angezeigt, und die vorhandenen Unterschiede werden folgendermaßen angezeigt:
   o sind die Netzwerktitel unterschiedlich, werden diese auf beiden Seiten farblich hinterlegt;
   o sind die Netzwerkkommentare unterschiedlich, werden diese auf beiden Seiten farblich hinterlegt;
   o die ungepaarten Bausteine werden im Netzwerk farblich hinterlegt (inklusive ihrer Pins, Überschriften bzw. Instanznamen);
   o bei den gepaarten Bausteinen werden die Unterschiede folgenderweise angezeigt:
      ■ wenn die Überschrift oder der Instanzname unterschiedlich ist, werden diese Informationen auf beiden Seiten farblich hinterlegt;
      ■ die nicht gepaarten unverschalteten Pins werden farblich hinterlegt (z.B. nur der Wertebereich);
- Selektiert man einen gepaarten Baustein oder ein gepaartes Pin auf der einen Seite, so wird das Paar des selektierten Bausteins/Pins automatisch selektiert; Das Gleiche gilt auch für Mehrfachselektion.

Mit dieser Anzeigemethode sind für den Anwender die Unterschiede in einem Netzwerk insbesondere durch eine farbliche Kennzeichnung der Elemente klar erkennbar. Gleiche Elemente sind z.B. nicht mit einer Färbung hinterlegt, wobei damit auch der Grad der Veränderung im Programm für den Anwender identifizierbar ist.

In einer Ausgestaltung des Verfahrens wird auf Basis des Kennwertes der Wahrheitswert ermittelt, wobei der Wahrheitswert insbesondere mittels einer Fuzzi-Logik ermittelt wird, wobei dieser vorteilhaft auch dargestellt wird. Dadurch wird erkennbar, ob ein angezeigter Unterschied unwahr sein kann. Abhängig von Wahrheitswert kann dann der Anwender z.B. eines der Programme in das andere Programm überführen.

Im Folgenden wird die Erfindung beispielhaft anhand von Figuren beschrieben und erläutert. Es zeigen:
- FIG 1: ein erstes Verfahren zum Vergleich von Objektmodellen;
- FIG 2: ein zweites Verfahren zum Vergleich von Objektmodellen;
- FIG 3: ein erstes Objektmodell;
- FIG 4: ein zweites Objektmodell;
- FIG 5: einen ersten vergleich zweier Differenzobjektmodelle;
- FIG 6: einen zweiten Vergleich zweier Differenzobjektmodelle;
- FIG 7: einen dritten Vergleich zweier Differenzobjektmodelle;
- FIG 8: einen Vergleich für einen Funktionsplan;
- FIG 9: einen Vergleich für einen Kontaktplan;
- FIG 10: eine Detaildarstellung der Netze nach FIG 9; und
- FIG 11: eine Detaildarstellung von Unterschieden betreffend ein Funktionselement.

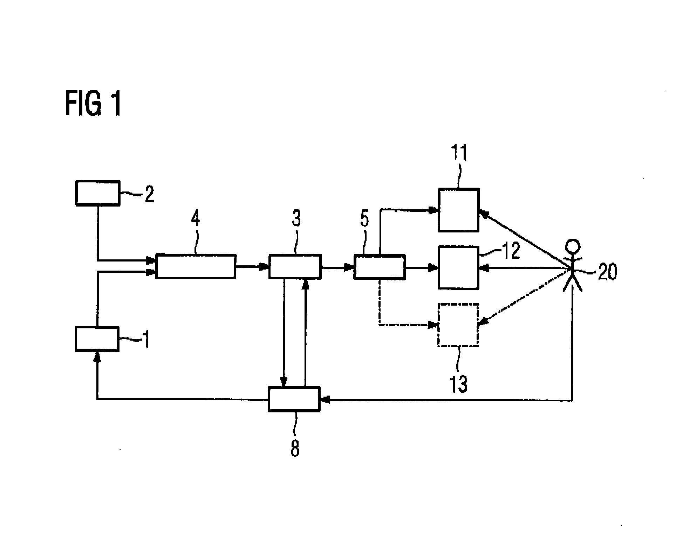

Die Darstellung gemäß FIG 1 zeigt ein erstes Verfahren zum Vergleich von Objektmodellen. Dargestellt ist ein erstes Objektmodell 1 und ein zweites Objektmodell 2. Beide Objektmodelle repräsentieren ein Programmchart, also ein auf Graphik basiertes Softwareprogramm, insbesondere ein Motion-Control-Chart MCC. Die Objektmodelle 1 und 2 werden in einem weiteren Verarbeitungsschritt 4 mittels einer MCC Differenzbildung miteinander verglichen und in einem Gesamtmodell (Gesamtobjektmodell von Objektmodell 1 plus 2) 3 zusammengefasst. Das so generierte Gesamtobjektmodell 3 wird dazu verwendet mittels einer MCC-Graphik-Engine 5 ein erstes Differenzobjektmodell 11 auf Basis des ersten Objektmodells 1 und ein zweites Differenzobjektmodell 12 auf Basis des zweiten Objektmodells 2 zu generieren. Mittels der Engine 5 kann auch eine Darstellung 13 des Gesamtobjektmodells generiert werden. Ein Betrachter oder Anwender 20 kann die Differenzobjektmodelle 11 und 12 sowie das Gesamtobjektmodell 13 auf einer Graphikeinheit (Bildschirm) betrachten. Dem Anwender 20 ist es auch ermöglicht über eine Korrekturfunktion 8 Unterschiede zwischen den Objektmodellen anzugleichen. Damit kann beispielsweise das erste Objektmodell 1 mittels der Informationen aus dem Gesamtobjektmodell 3 verändert werden. Die Veränderung kann zu einer teilweisen oder vollständigen Angleichung der Objektmodelle 1 und 2 führen.

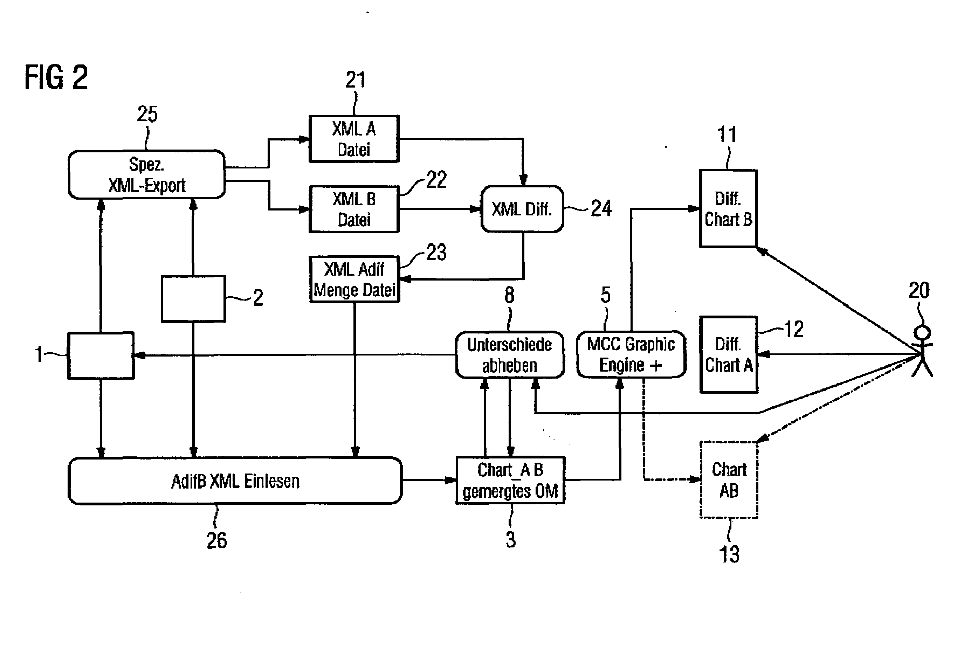

Die Darstellung nach FIG 2 zeigt ein weiteres verfahren zum Vergleich von Objektmodellen. Dargestellt ist ein erstes Objektmodell 1 und ein zweites Objektmodell 2. Beide objektmodelle repräsentieren ein Programmchart, also ein auf Graphik basiertes Softwareprogramm, insbesondere ein Motion-Control-Chart MCC. Beide Objektmodelle 1 und 2 werden in einem Verarbeitungsschritt 25 einem XML-Export unterzogen. Nach diesem XML-Export 25 sind XML basierte Objekmodelle 21 und 22 vorhanden. Das erste und das zweite XML basierte Objektmodelle 1 und 2 werden in einem weiteren Verarbeitungsschritt 24 mittels einer Art Differenzbildung (Erkennung von Unterschieden) miteinander verglichen und in einem XML basierten Gesamtmodell (XML basiertes Gesamtobjektmodell der XML basieren Objektmodelle 1 plus 2) 23 zusammengefasst. Das XML basierte Gesamtmodell 23 kann in einem weiteren Verarbeitungsschritt 26 zusammen mit den Objektmodellen 1 und 2 zu einem Gesamtmodell 3 zusammengeführt werden. Das so generierte Gesamtobjektmodell 3 wird dazu verwendet mittels einer MCC-Graphik-Engine 5 ein erstes Differenzobjektmodell 11 auf Basis des ersten Objektmodells 1 und ein zweites Differenzobjektmodell 12 auf Basis des zweiten Objektmodells 2 zu generieren. Mittels der Engine 5 kann auch eine Darstellung 13 des Gesamtobjektmodells generiert werden. Dies ist optional und deshalb in FIG 1 und FIG 2 strichliniert dargestellt. Ein Betrachter oder Anwender 20 kann die Differenzobjektmodelle 11 und 12 sowie das Gesamtobjektmodell 13 auf einer Graphikeinheit (Bildschirm) betrachten. Dem Anwender 20 ist es auch ermöglicht über eine Korrekturfunktion 8 Unterschiede zwischen den Objektmodellen anzugleichen. Damit kann beispielsweise das erste Objektmodell 1 mittels der Informationen aus dem Gesamtobjektmodell 3 verändert werden. Die Veränderung kann zu einer teilweisen oder vollständigen Angleichung der Objektmodelle 1 und 2 führen.

Mit Hilfe eines der obig beschriebenen Verfahren ist es möglich Programme, welche auf Basis eines grafischen Flussdiagramms existieren, nur als Grafik zu vergleichen bzw. Unterschiede zu einem anderen Programm darzustellen. Aus Daten zur Grafik wird über einen Generierprozess das eigentlich ablauffähige Programm (Maschinenprogramm) gebildet, wobei dieses Generat bislang keine Möglichkeit bot, über einen umgekehrten Prozess die Daten wieder in eine Grafik zu überführen. Auf Basis der beschriebenen verfahren besteht nunmehr die Möglichkeit, zu vergleichende Flussdiagramme auf Basis der grafischen Informationen zu vergleichen.

Aus Daten zur Grafik wird beispielsweise ein reduziertes Beschreibungsformat der Grafik für den Vergleich generiert. Dieses reduzierte Beschreibungsformat weist beispielsweise keine Daten darüber auf, wie Elemente des Ablaufdiagramms in Maschinensprache zu übersetzen sind. Das reduzierte Beschreibungsformat wird insbesondere für beide Objektmodelle generiert, wobei die Objektmodelle zu vergleichende Ablaufdiagramme darstellen. Dann werden die beiden reduzierten Beschreibungsformate der Grafik zusammengeführt. Dieses zusammengeführte Beschreibungsformat wird nun wiederum mit dem ersten reduzierten Beschreibungsformat und dem zweiten reduzierten Beschreibungsformat verglichen und daraus die Unterschiede ermittelt.

Aus diesen Ergebnissen können nun wiederum aus den reduzierten Beschreibungen und den Unterschieden die Grafiken der Ursprungsprogramme mit den Unterschieden erzeugt werden, dies sind die Differenzobjektmodelle 11 und 12. Die Unterschiede können so farblich gekennzeichnet, dass der Anwender neu hinzugekommene, geänderte oder gelöschte Elemente direkt erkennen kann. Damit ergibt sich ein Verfahren zum Vergleich von grafischen Flussdiagrammen und zur Anzeige der Unterschiede direkt im grafischen Programm.

Die Visualisierung der Unterschiede der Objektmodelle kann in geeigneter und damit dedizierter Form erfolgen. Folgende Unterschiede können beispielsweise dargestellt werden:
- im ersten Programm sind mehr Elemente/Strukturen vorhanden als im Zweiten,
- im zweiten Programm sind mehr Elemente/Strukturen vorhanden als im Ersten, und/oder
- in beiden Programmen ist derselbe Befehl vorhanden, aber unterschiedlich parametriert.

Gefundene Unterschiede können optional auch direkt abgeglichen werden. Das Verfahren bietet dem Anwender 20 die Möglichkeit, zwei Programme miteinander zu vergleichen und färbt die Unterschiede mit entsprechenden Farbkennzeichnungen gemäß der Unterschiedstypen ein. Darüber hinaus ist es vorgesehen gefundene Unterschiede entsprechend abzugleichen.

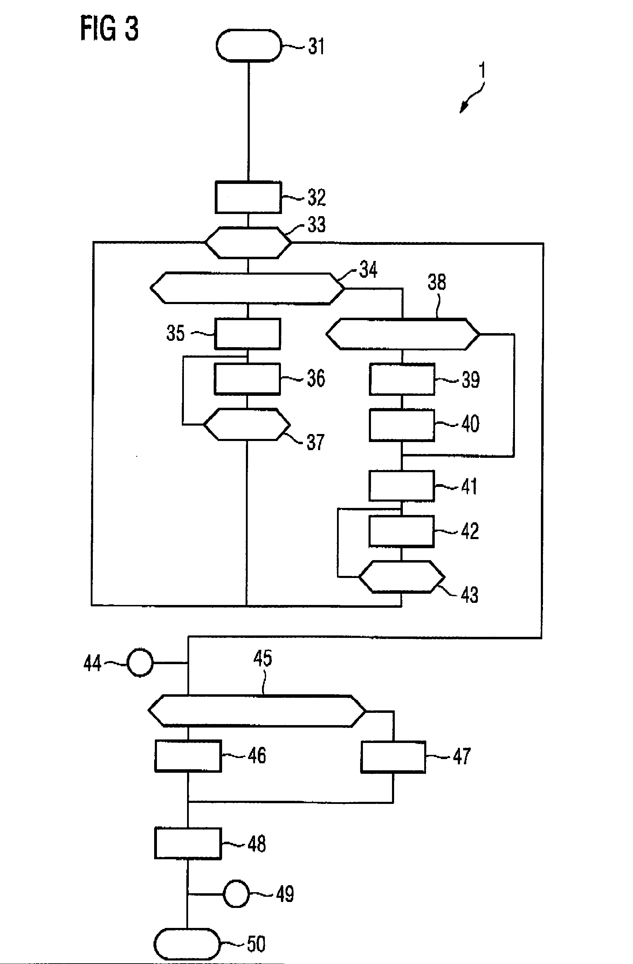

Die Darstellung gemäß FIG 3 zeigt ein erstes Objektmodell 1 mit den Elementen 31 bis 50, welche entsprechend der Darstellung nach FIG 3 miteinander verknüpft sind.

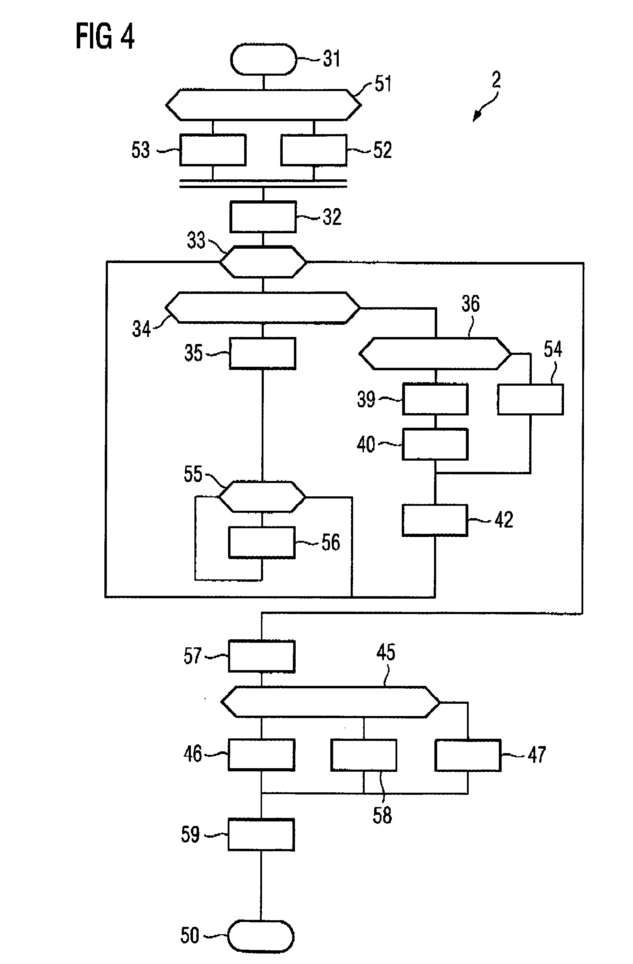

Die Darstellung gemäß FIG 4 zeigt ein zweites Objektmodell 2 mit den Elementen 31 bis 36, 39, 40, 42, 45 bis 47 und 50 bis 59, welche entsprechend der Darstellung nach FIG 4 miteinander verknüpft sind.

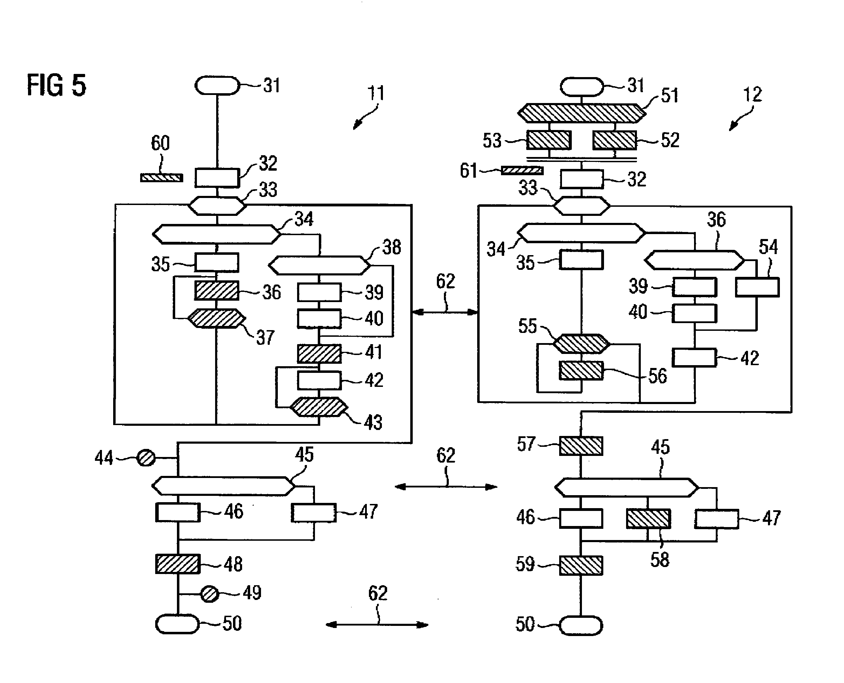

Die Darstellung gemäß FIG 5 zeigt ein erstes Differenzobjektmodell 11 mit den Elementen 31 bis 50 und 60, welche entsprechend der Darstellung nach FIG 5 miteinander verknüpft sind. Weiterhin zeigt die Darstellung gemäß FIG 5 zeigt ein zweites Differenzobjektmodell 12 mit den Elementen 31 bis 36, 39, 40, 42, 45 bis 47, 50 bis 59 und 61, welche entsprechend der Darstellung nach FIG 5 miteinander verknüpft sind. Das erste Differenzobjektmodell 11 basiert auf dem Objektmodell 1, welches in FIG 3 dargestellt ist. Das zweite Differenzobjektmodell 12 basiert auf dem zweiten Objektmodell 2, welches in FIG 4 dargestellt ist. Im ersten Differenzobjektmodell 11 sind die Elemente markiert, durch welche sich das erste Objektmodell 1 vom zweiten Objektmodell 2 unterscheidet. Basis für das erste Differenzobjektmodell 11 ist folglich das erste Objektmodell 1. Markiert sind die Elemente 36, 37, 41, 43, 44, 48 und 49 da diese Elemente des ersten Objektmodells 1 im zweiten Objektmodell 2 nicht vorkommen. Die Markierung erfolgt beispielsweise durch eine Grauschattierung der entsprechenden Elemente, wie dies in FIG 5 gezeigt ist. Nicht dargestellt aber möglich ist auch eine farbige Markierung der Elemente 36, 37, 41, 43, 44, 48 und 49 z.B. in blau. Markierungen im zweiten Differenzobjektmodell 12 können in gleicher Weise oder auch anders markiert werden, z.B. in orange. Gleiche Elemente in den Differenzobjektmodellen 11 und 12 sind nicht markiert. Dies betrifft die Elemente 31 bis 35, 38 bis 40, 42, 45 bis 47 und 50. Das Differenzobjektmodell 11 weist ein zusätzliches Element 60 auf, welches auch durch eine Grauschattierung markiert ist und beispielsweise angibt, dass ein Parameter des Elementes 32 im vergleich zwischen den Objektmodellen 1 und 2 anders ist.

Im zweiten Differenzobjektmodell 12 sind die Elemente markiert, durch welche sich das zweite Objektmodell 2 vom ersten Objektmodell 1 unterscheidet. Basis für das zweite Differenzobjektmodell 12 ist folglich das zweite Objektmodell 2. Das zweite Objektmodell 2 unterscheidet sich vom ersten objektmodell 1 durch die Elemente 51 bis 53, 50, 54, 56, 57, 58 und 59, welche im zweiten Differenzobjektmodell 12 grau schattiert sind. Das Differenzobjektmodell 12 weist ein zusätzliches Element 61 auf, welches auch durch eine Grauschattierung markiert ist und beispielsweise angibt, dass ein Parameter des Elementes 32 im Vergleich zwischen den Objektmodellen 2 und 1 anders ist.

Wie in FIG 5 ersichtlich, können erstes und zweites Differenzobjektmodell 11 und 12 derart nebeneinander dargestellt werden, dass sich gleiche Elemente (31 bis 35, 38 bis 40, 42, 45 bis 47 und 50) in gleicher Höhe befinden. In FIG 5 ist eine vertikale vergleichende Darstellung gewählt. Dies kommt durch die Pfeile 62 zum Ausdruck.

In der Darstellungsvariante nach FIG 5 sind Elemente, welche in einem Objektmodell fehlen nicht in dem Differenzobjektmodell dargestellt, welches auf dem Objektmodell basiert, wo diese Elemente fehlen. In einer auch möglichen Darstellungsvariante, welche in FIG 5 nicht dargestellt ist, können auch fehlende Elemente angezeigt werden, z.B. mittels einer halbtransparenten Darstellung des fehlenden Elementes.

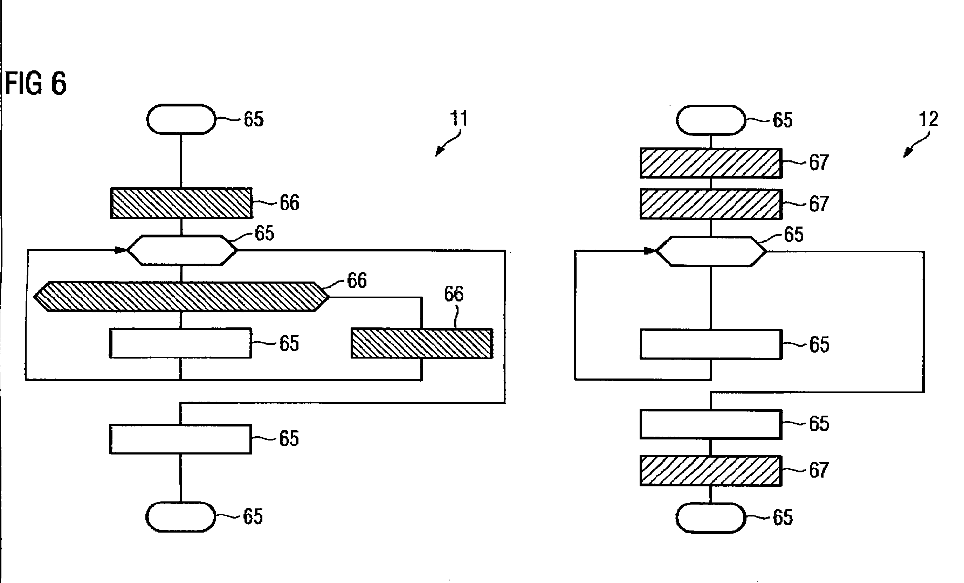

Die Darstellung gemäß FIG 6 zeigt einen zweiten Vergleich zweier Differenzobjektmodelle 11 und 12. Gleiche Elemente 65 weisen eine gemeinsame Darstellung in den verschiedenen Differenzobjektmodellen 11 und 12 auf. Unterschiedliche Elemente 66 weisen im ersten Differenzobjektmodell 11 eine zu den gemeinsamen Elementen 65 unterschiedliche Markierung auf. Unterschiedliche Elemente 67 weisen im zweiten Differenzobjektmodell 12 eine zu den gemeinsamen Elementen 65 unterschiedliche Markierung auf.

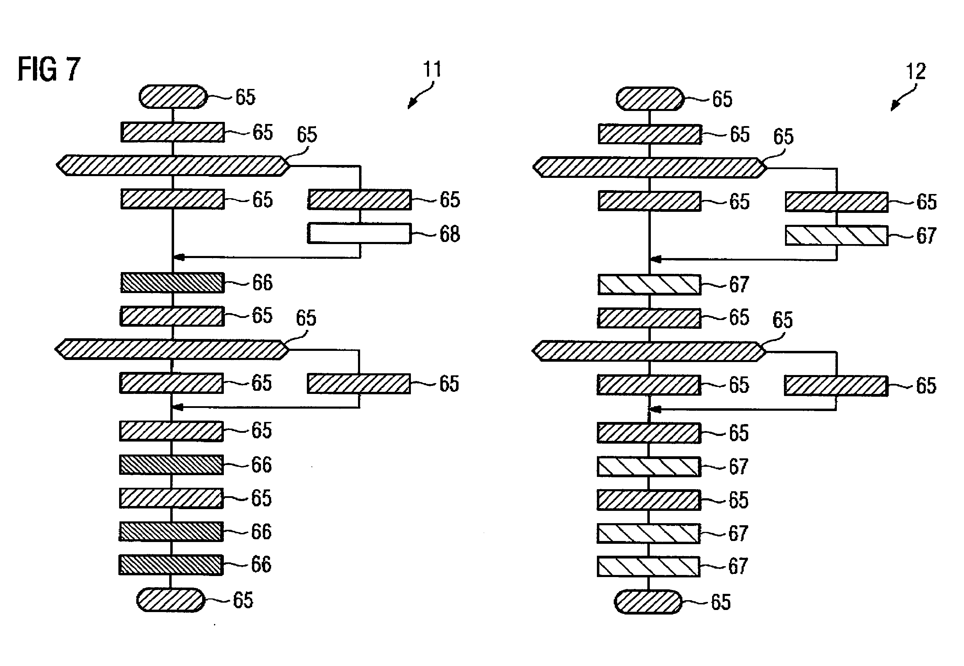

Die Darstellung gemäß FIG 7 zeigt einen dritten Vergleich zweier Differenzobjektmodelle 11 und 12. Wiederum weisen gleiche Elemente 65 eine gemeinsame Darstellung in den verschiedenen Differenzobjektmodellen 11 und 12 auf. Unterschiedliche Elemente 66 weisen im ersten Differenzobjektmodell 11 eine zu den gemeinsamen Elementen 65 unterschiedliche Markierung auf. Unterschiedliche Elemente 67 weisen im zweiten Differenzobjektmodell 12 eine zu den gemeinsamen Elementen 65 unterschiedliche Markierung auf. Unterschiedliche Elemente 67 weisen unterschiedliche Parametrierungen auf. Das Objektmodell, welches dem zweiten Differenzobjektmodell 12 zu Grunde liegt, weist ein Element auf, welches in dem Objektmodell, welches dem ersten Differenzobjektmodell 11 zu Grunde liegt nicht vorhanden ist. Dieses Element 68 ist im ersten Differenzobjektmodell 11 gesondert markiert, insbesondere durch ein leeres Kästchen.

Bei Motion-Control-Charts kann also der Vergleich gleichartig gestaltet werden, wie dies aus den Figuren 3 bis 7 auch ersichtlich wird. Das heißt, die Programme (Objektmodelle) werden gegenübergestellt und die Unterschiede werden z.B. farblich eingefärbt. Dabei wird die Grafik entsprechend auf beiden Seiten angepasst, damit gleiche oder gleichartige Elemente (Elemente mit Unterschied) auf derselben Höhe erscheinen. Fehlen Elemente in einem Programm, werden beim Markieren des Befehls in einem Programm auf der gegenüberliegenden Seite im anderen Programm z.B. ein blauer Rahmen eingeblendet. Damit sieht der Anwender wo in diesem Programm der Befehl nicht vorhanden ist. Vorteilhaft können einzelne Elemente übernommen werden oder auch alle Unterschiede auf einmal. Da innerhalb einer Befehlsbox (stellt einen Element-Typ dar) ebenfalls Unterschiede vorhanden sein können, gibt es vorteilhaft bei MCC auch noch zusätzlich einen Detailvergleich der einzelnen Befehlsbox. Bei fehlenden Elementen ist der Vergleich in der Lage die fehlenden Elemente in einem Chart zu ermitteln und dann die Grafik entsprechend zu strecken. Damit sind die Elemente immer auf derselben Ebene. Somit ist für den Anwender klar ersichtlich, dass die Strukturen ähnlich sind, aber dass an entsprechenden Stellen Elemente fehlen. Zur Verdeutlichung kann der Anwender das überzählige Element markieren und erhält an der Stelle im Chart, wo das Element fehlt z.B. wieder einen blauen Rahmen. Bei gleichartigen Elementen, die jedoch unterschiedlich sind, werden die Elemente gegenübergestellt. Durch die Einfärbung wird dem Anwender mitgeteilt, dass die Befehle zwar ähnlich sind, aber Unterschiede in der Parametrierung bestehen. Unterschiede in der Parametrierung können z.B. durch Aufruf (Doppelklick) einer Detailmaske aufgerufen werden.

Die Methodik zu diesem Vergleich könnte auch für andere grafische Darstellungen von Flowcharts Anwendung finden. Denn in dem vergleich wird durch die Methodik eine Ableitung der grafischen Darstellung verwendet. Zur Ermittlung der überzähligen bzw. fehlenden Elemente werden dann beide grafischen Repräsentanzen zusammengeführt. Dieses Ergebnis aus beiden Charts wird dann zur Darstellung der gestreckten Grafik verwendet. Durch die Ermittlung der im einzelnen Chart vorhandenen Elemente zu der zusammengeführten Repräsentanz werden dann die Elemente der einzelnen Charts bei Unterschieden entsprechend eingefärbt und die nicht vorhandenen Elemente entfernt. Die Streckung der Grafik bleibt dabei jedoch erhalten. Das Ergebnis in den grafischen Darstellungen der einzelnen Charts ist eine synchrone Darstellung beider Grafiken mit den entsprechenden Unterschieden.

Durch Doppelklick auf z.B. eine markierte Befehlsbox (Element) kann vorteilhaft ein Dialogfenster geöffnet werden. Im Dialogfenster werden Detailinformationen zum Element angezeigt, wobei auch hier Unterschiede markiert, insbesondere eingefärbt werden. Darüber hinaus kann sich der Anwender z.B. zusätzlich über die Wertvergabe im Befehl informieren. Sich auch da Unterschiede vorhanden, werden auch diese farblich gekennzeichnet. Dies dient dazu dem Anwender eine Entscheidungshilfe zu geben, ob es sinnvoll ist den Befehl zu übernehmen.

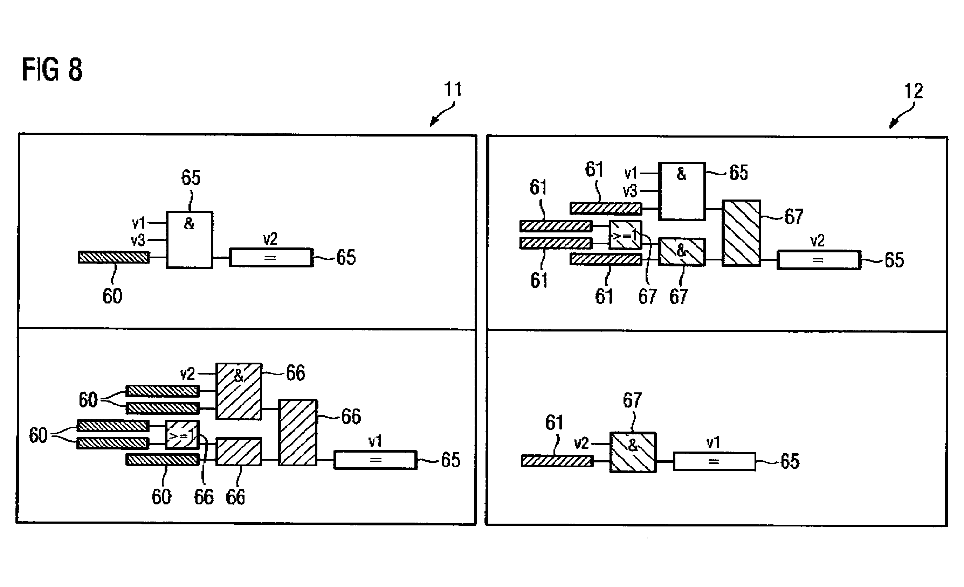

Die Darstellung gemäß FIG 8 zeigt einen Funktionsplan für ein erstes Programm 11 und einen Funktionsplan für ein zweites Programm 12, wobei jeweils schon die Unterschiede markiert sind. Die Programme 11 und 12 werden also als Differenzobjektmodelle 11 und 12 dargestellt. Gleiche Elemente 65 weisen eine gemeinsame Darstellung in den verschiedenen Differenzobjektmodellen 11 und 12 auf. Unterschiedliche Elemente 66 weisen im ersten Differenzobjektmodell 11 eine zu den gemeinsamen Elementen 65 unterschiedliche Markierung auf. Unterschiedliche Elemente 67 weisen im zweiten Differenzobjektmodell 12 eine zu den gemeinsamen Elementen 65 unterschiedliche Markierung auf. Mit den Markierungen 60 und 61 werden Unterschiede bei Variablen angezeigt. Im Ergebnis ist ein Vergleich von zwei Programmen angezeigt. Das Referenzprogramm ist beispielsweise in der Darstellung auf der linken Seite dargestellt. Das dagegen verglichene Programm wird auf der rechten Seite dargestellt. Die zueinander passenden Netzwerke werden gegenübergestellt und befinden sich auf der gleichen Ebene. Dabei werden die Unterschiede in den Netzwerken z.B. farblich eingefärbt, was in der FIG jedoch nicht dargestellt ist. Die als gleich ermittelten Elemente behalten Ihre normale Darstellung bei. In dem Bespiel ist darüber hinaus ersichtlich, dass durch die neuen Vergleichsalgorithmen auch unvollständig eingegebene Programme gegeneinander verglichen werden können.

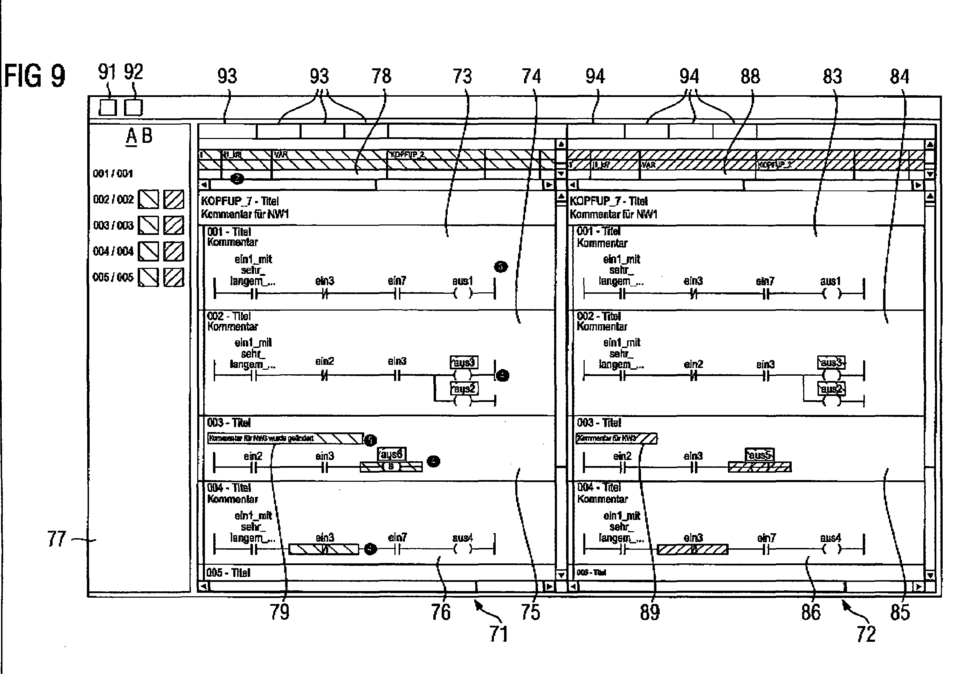

Die Darstellung gemäß FIG 9 zeigt einen Vergleich zweier Programme, welche als Kontaktplan dargestellt sind. Gezeigt sind ein erster Kontaktplan 71 und ein zweiter Kontaktplan 72. Zum Vergleich dieser Programmquellen, werden die Kontaktpläne 71 und 72 gegenübergestellt. Unterschiede können farbig eingefärbt werden, wobei in FIG 9 lediglich eine Grauschattierung gezeigt ist. Unterschiede im Plan 71 können beispielsweise blau oder mit einer Linksschraffur dargestellt sein. Unterschiede im Plan 72 können beispielsweise orange bzw. gelb oder mit einer Rechtsschraffur dargestellt sein.

Gezeigt sind jeweils 4 Netzwerke je Programm 71 und 72. In einer linken Bildhälfte ist eine Liste mit Netzwerknummern gezeigt. Die Netzwerke 73 und 83 haben die Nummer 001. Die Netzwerke 74 und 84 haben die Nummer 002. Die Netzwerke 75 und 85 haben die Nummer 003. Die Netzwerke 76 und 86 haben die Nummer 004. Die Netzwerke des Programms 71 werden in einer Spalte A zur Kennzeichnung gebracht. Die Netzwerke des Programms 72 werden in einer Spalte B zur Kennzeichnung gebracht. Unterscheidet sich Netzwerke zweier Programme nicht, so wird dies beispielsweise so zur Kennzeichnung gebracht, dass, wie in FIG 9 Rechtecke nicht ausgefüllt sind. Liegen Unterschiede vor sind die Rechtecke für das entsprechende Netzwerk farbig markiert (z.B. blau für Netzwerke des Programms 71 in Spalte A und orange bzw. gelb für Netzwerke des Programms 72 in Spalte B. In FIG 9 Unterscheiden sich die Netzwerke 002, 003, 004 und 005.

In der linken Übersicht werden also die Netzwerknummern in Spalten A, B aufgelistet, wobei vorgesehen ist, dass man durch Mausklick auf die Unterschiedsstelle springen kann. Bei großen Programmen ist das von Vorteil, damit der Anwender nicht an die Unterschiedsstelle scrollen muss.

Unterschiede in der Variablendeklaration werden ebenfalls farblich eingefärbt. Hierfür ist ein Fenster 78 für das erste Programm 71 und ein Fenster 88 für das zweite Programm 72 vorgesehen. Falls verschieden Darstellungen z.B. für:
- Parameter/Variablen;
- I/O-Symbole;
- Strukturen; und
- Aufzählungen
vorhanden sind und diese beispielsweise durch Reiter bzw. Laschen 93, 94 anwählbar sind, können auch diese Reiter bzw. Laschen farbig gekennzeichnet sein, falls Unterschiede in den Daten der jeweiligen Reiter bzw. Laschen vorhanden sind.

Die Netzwerke 73 und 83 sind gleich und deswegen in der Gegenüberstellung nicht eingefärbt.

Bei der Darstellung der Unterschiede in den Netzwerken 74 bis 76 und 84 bis 86 werden die einzelnen Elemente eingefärbt (insbesondere unterschiedlich eingefärbt) oder grau hinterlegt. Sind die Unterschiede in den Variablen, werden nur diese eingefärbt oder grau hinterlegt. Bei Unterschieden in der Verschaltung erfolgt die Einfärbung bzw. Graufärbung nur dort. Bezeiht sich der Unterschied auf beides, ist auch beides eingefärbt bzw. grau gefärbt. Dies ist möglich durch die Verwendung von zumindest 2 verschiedenen Hashes. Damit können Unterschiede in der Struktur und in den Variablen separat ermittelt werden.

Auch Unterschiede in den Kommentaren werden gefunden und entsprechend farblich oder grau hinterlegt, wie dies in FIG 9 bei den Kommentaren 79 und 80 gezeigt ist.

Mit Hilfe von Funktionsschaltflächen 91 und 92 links oben können die Unterschiede von der linken Quelle 71 in die rechte 72 einzeln oder komplett übernommen werden. Auch hier ist ein Springen zum nächsten Unterschied möglich.

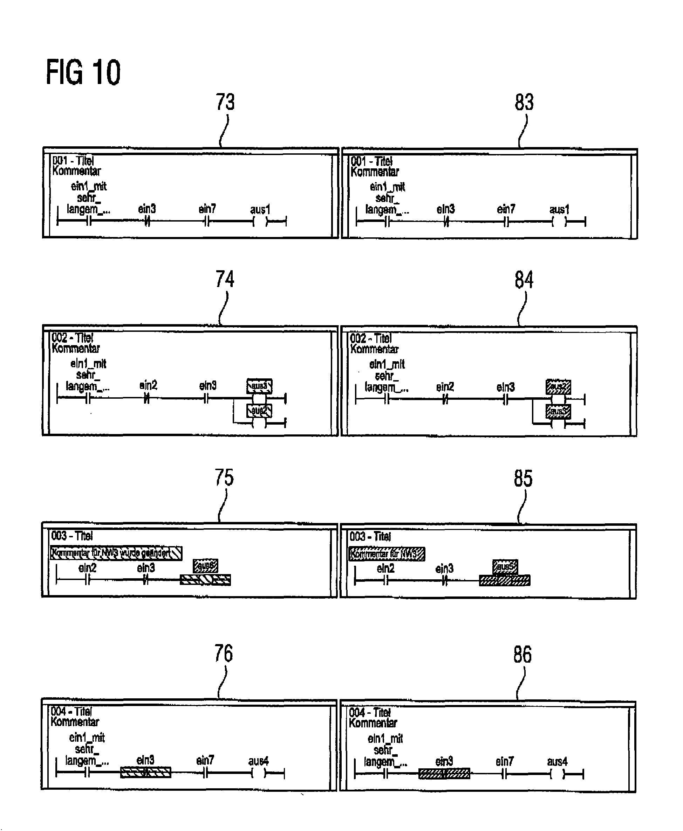

Die Darstellung gemäß FIG 10 zeigt Detailansichten der Netze aus FIG 9.

Die Netzwerke 73 und 83 sind gleich und werden ohne Einfärbung und farbliche Markierung gegenüber gestellt.

Für die Netzwerke 74 und 84 wurde aufgrund des Variablenhashes ermittelt, dass die Netzwerk Unterschiede bei den Ausgängen besitzen. Dabei ist die Funktion beider Netzwerke gleich, aber die Ausgänge sind von der Programmierreihenfolge vertauscht. Die Unterschiede sind markiert.

Für die Netzwerke 75 und 85 wurde festgestellt, dass die Ausgangsvariable und auch die Funktion des Ausgangs unterschiedlich ist. Darüber hinaus gibt es einen Unterschied im Kommentar. Das Netzwerk ist aber genügend ähnlich um gegenübergestellt zu werden. Die Unterschiede sind markiert.

Für die Netzwerke 76 und 86 wurde festgestellt, dass ein Unterschied nur im Strukturhash vorliegt. Das heißt alle Variablen sind gleich. Jedoch wurde der Öffner gegen einen Schließer getauscht. Dieser Unterschied ist wiederum markiert.

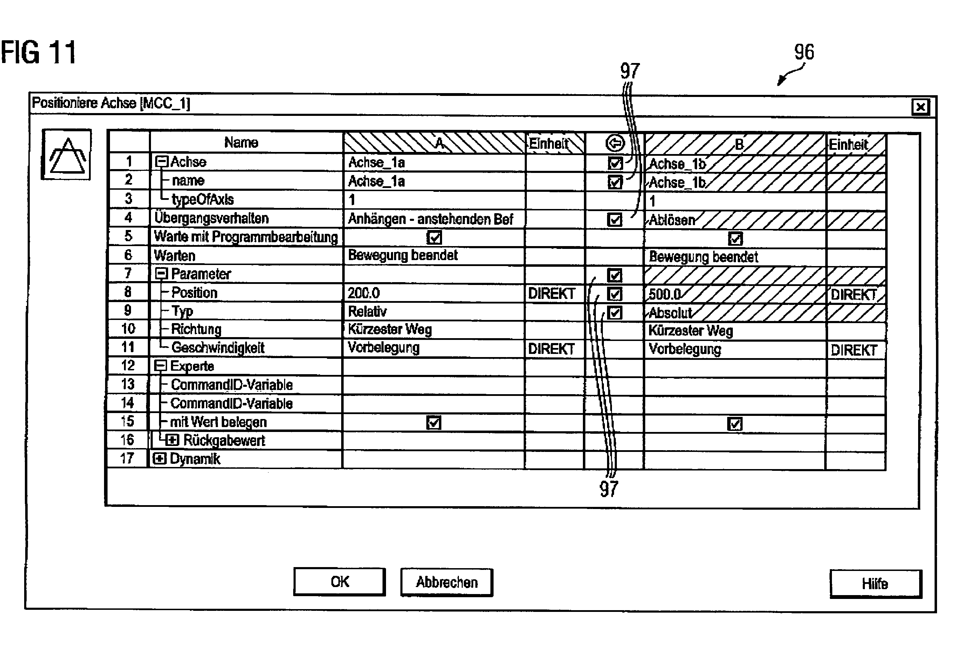

Die Darstellung gemäß FIG 11 zeigt die Detaildarstellung von Unterschieden eines Funktionselementes Achse 96. Durch Doppelklick auf das entsprechende Element beispielsweise im Differenzobjektmodell öffnet sich das Element, wobei mit Farbmarkierung Unterschiede zwischen zwei gleichartigen Elementen angezeigt werden. Mit Dialogboxen 97 kann ein Anwender entscheiden welche Änderungen von einem in das andere Programm übernommen werden sollen. Dies ist deswegen sehr einfach, weil auch hier die Einfärbung die Unterschiede kennzeichnen. Darüber hinaus kann der Anwender sich zusätzlich über die Wertvergabe im Befehl informieren. Sind auch da Unterschiede vorhanden, werden auch diese farblich gekennzeichnet. Dies dient dazu dem Anwender eine Entscheidungshilfe zu geben, ob es sinnvoll ist den Befehl zu übernehmen.

Wird in der Beschreibung zu den Figuren auf eine Kennzeichnung mittels einer Grauschattierung bzw. mittels einer grauen Hinterlegung Bezug genommen, so kann dies in der jeweiligen Figur auch durch eine entsprechende Schraffur ersetzt sein.

## Patentansprüche

1. Verfahren zum Vergleich graphischer Programme, wobei ein erstes Objektmodell (1) mit einem zweiten Objektmodell (2) verglichen wird, wobei ein erstes Differenzobjektmodell (11) und insbesondere ein zweites Differenzobjektmodell (12) dargestellt werden.

2. Verfahren nach Anspruch 1, wobei zum Vergleich das erste Objektmodell (1) mit dem zweiten Objektmodell (2) zu einem Gesamtmodell (3) zusammengefasst wird, wobei zumindest eines der Objektmodelle (1,2) mit dem Gesamtmodell (3) verglichen wird, wobei Unterschiede zwischen Gesamtmodell (3) und zumindest einem der Objektmodelle (1,2) in einem der Differenzobjektmodelle (11,12) dargestellt werden.

3. Verfahren nach Anspruch 2, wobei das erste Objektmodell (1) mit dem Gesamtmodell (3) verglichen wird und das erste Objektmodell (1) mit den Unterschieden zum Gesamtmodell (3) in dem ersten Differenzobjektmodell (11) dargestellt wird, wobei insbesondere auch das zweite Objektmodell (2) mit dem Gesamtmodell (3) verglichen wird und mit den Unterschieden zum Gesamtmodell (3) in dem zweiten Differenzobjektmodell (12) dargestellt wird.

4. Verfahren nach einem der Ansprüche 1 bis 3, wobei das erste Differenzobjektmodell (11) und das zweite Differenzobjektmodell (12) gleichzeitig nebeneinander dargestellt werden.

5. Verfahren nach einem der Ansprüche 1 bis 4, wobei in den Differenzobjektmodellen (11,12) Gleichartigkeiten zwischen dem ersten Objektmodell (1) und dem zweiten Objektmodell (2) dargestellt werden.

6. Verfahren nach einem der Ansprüche 1 bis 5, wobei bei einer Gegenüberstellung von erstem Objektmodell (1) und zweiten Objektmodell (2) Unterschiede farblich markiert sind.

7. Verfahren nach einem der Ansprüche 1 bis 6, wobei bei einer Gegenüberstellung von erstem Objektmodell (1) und zweiten Objektmodell (2) gleichartige Elemente in beiden Objektmodellen (1,2) vertikal oder horizontal auf gleicher Höhe dargestellt werden.

8. Verfahren nach einem der Ansprüche 1 bis 7, wobei im ersten Differenzobjektmodell (11) und/oder im zweiten Differenzobjektmodell (12) ein fehlendes Element und/oder ein zusätzliches Element dargestellt wird.

9. Verfahren nach einem der Ansprüche 1 bis 8, wobei das Differenzobjektmodell (11,12) zumindest einen der nachfolgenden Unterschiede zeigt:
ein zusätzliches Element,
ein fehlendes Element,
eine zusätzliche Verknüpfung,
eine fehlende Verknüpfung,
eine gleiche Parametrierung eines Elementes,
eine unterschiedliche Parametrierung eines Elementes, und
einen unterschiedlichen Versionsstand eines Elementes.

10. Verfahren nach einem der Ansprüche 1 bis 9, wobei das erste Objektmodell (1) mit dem zweiten Objektmodell (2) derart verglichen wird, dass aus dem ersten Objektmodell (1) erste XML-Daten (6) generiert werden, dass aus dem zweiten Objektmodell (2) zweite XML-Daten (7) generiert werden, und dass die XML-Daten (6,7) derart verarbeitet werden, dass mit Hilfe der verarbeiteten Daten das erste Differenzobjektmodell (11) und das zweite Differenzobjektmodell generiert werden.
